(19) **Europäisches Patentamt**
European Patent Office
Office européen des brevets

(11) **EP 2 730 050 B1**

(12) **EUROPÄISCHE PATENTSCHRIFT**

(45) Veröffentlichungstag und Bekanntmachung des Hinweises auf die Patenterteilung:
**17.06.2020   Patentblatt 2020/25**

(51) Int Cl.:
*H04L 9/32* *(2006.01)*       *H04L 29/06* *(2006.01)*
*G06F 21/34* *(2013.01)*       *G06F 21/62* *(2013.01)*

(21) Anmeldenummer: **12738071.5**

(86) Internationale Anmeldenummer:
**PCT/EP2012/063399**

(22) Anmeldetag: **09.07.2012**

(87) Internationale Veröffentlichungsnummer:
**WO 2013/007686 (17.01.2013 Gazette 2013/03)**

(54) **VERFAHREN ZUR ERSTELLUNG UND ÜBERPRÜFUNG EINER ELEKTRONISCHEN PSEUDONYMEN SIGNATUR**

METHOD FOR GENERATING AND VERIFYING AN ELECTRONIC PSEUDONYMOUS SIGNATURE

PROCÉDÉ DE CRÉATION ET DE VÉRIFICATION D'UNE SIGNATURE ÉLECTRONIQUE PAR PSEUDONYME

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.07.2011   DE 102011107501**

(43) Veröffentlichungstag der Anmeldung:
**14.05.2014   Patentblatt 2014/20**

(73) Patentinhaber: **Bundesrepublik Deutschland, vertreten durch das Bundesministerium des Inneren, vertreten durch das Bundesamt für Sicherheit in der 53175 Bonn (DE)**

(72) Erfinder: **KÜGLER, Dennis 53121 Bonn (DE)**

(74) Vertreter: **Schohe, Stefan Boehmert & Boehmert Anwaltspartnerschaft mbB Pettenkoferstrasse 22 80336 München (DE)**

(56) Entgegenhaltungen:
**WO-A1-2010/034507       US-A1- 2009 048 979**

- **YANG ZHANG: "An Efficient Anonymous Authentication Protocol with Pseudonym Revocability", INC, IMS AND IDC, 2009 FIFTH INTERNATIONAL JOINT CONFERENCE ON, IEEE, PISCATAWAY, NJ, USA, 25. August 2009 (2009-08-25), Seiten 1929-1934, XP031564722, ISBN: 978-0-7695-3769-6**
- **WEI-CHI KU ET AL: "A pseudonymous joint signature scheme", INFORMATION NETWORKING, 1998. (ICOIN-12). PROCEEDINGS., TWELFTH INTERN ATIONAL CONFERENCE ON TOKYO, JAPAN 21-23 JAN. 1998, LOS ALAMITOS, CA, USA,IEEE COMPUT. SOC, US, 21. Januar 1998 (1998-01-21), Seiten 95-98, XP010265284, DOI: 10.1109/ICOIN.1998.648360 ISBN: 978-0-8186-7225-5**
- **YANG ZHANG ET AL: "A Delegation Solution for Universal Identity Management in SOA", IEEE TRANSACTIONS ON SERVICES COMPUTING, IEEE, USA, Bd. 4, Nr. 1, 1. Januar 2011 (2011-01-01), Seiten 70-81, XP011374663, ISSN: 1939-1374, DOI: 10.1109/TSC.2010.9**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Verwendung bei der Kommunikation zwischen einem Ersteller und einem Empfänger und eine Chipkarte zur elektronischen, pseudonymen Signatur.

Elektronische Signaturen sind weitläufig bekannt. Sie basieren auf asymmetrischen kryptographischen Verfahren. Für die Signaturerstellung wird ein privater Schlüssel, der nur dem Signaturschlüsselinhaber bekannt ist, verwendet. Zur Signaturverifikation dient ein zum privaten Schlüssel zugehöriger öffentlicher Schlüssel. Der öffentliche Schlüssel wird in der Regel durch eine vertrauenswürdige Instanz beglaubigt, die über ein Zertifikat die Identität des Inhabers des Schlüsselpaares mit dem öffentlichen Schlüssel verbindet. Das Zertifikat wird dann in öffentliche Verzeichnisse eingestellt, so dass jede mit dem Schlüssel erstellte Signatur eindeutig dem Schlüsselinhaber zuzuordnen ist und jeder mit Zugriff auf das Verzeichnis die Gültigkeit der Signatur prüfen kann. Ein Beispiel für eine derartige Infrastruktur ist die "qualifizierte elektronische Signatur" nach dem deutschen Signaturgesetz.

Aus der Technischen Richtlinie BSI TR-03110 ist ein Verfahren zum anonymen Datenaustausch zwischen einem Ersteller (z.B. Nutzer einer Chipkarte) und einem Empfänger (z.B. Dienstanbieter) bekannt. Bei dem Verfahren wird seitens des Erstellers ein Pseudonym benutzt. Dem Ersteller sind ein öffentlicher und ein privater statischer Schlüssel zugeordnet. Die Schritte sind:

- der Ersteller erhält die Identität des Empfängers,
- der Ersteller berechnet ein Pseudonym aus seinem privatem Schlüssel und der Identität des Empfängers,
- der Ersteller übermittelt das Pseudonym an den Empfänger,
- der Empfänger prüft anhand des Pseudonyms, ob die Chipkarte registriert oder gesperrt ist.

Gemäß der Richtlinie handelt es sich bei den Chipkarten um hoheitliche Dokumente, worunter ein Personalausweis fällt.

Das vorgenannte Verfahren wird nachfolgend detailliert beschrieben:

- Bei dem Verfahren handelt es sich nicht um eine elektronische Signatur. Ein Ersteller und ein Empfänger einer Signatur liegen deshalb nicht vor. Daher wird im Folgenden von einem "Nutzer" anstelle des Erstellers und von einem "Dienstanbieter" anstelle des Empfängers gesprochen.
- Es wird ein eindeutiges Pseudonym zwischen einem Dienstanbieter, der eine elektronische Dienstleistung anbietet, und einem Nutzer, der diese Dienstleistung verwendet bzw. in Anspruch nimmt, erzeugt. Dieses Pseudonym erlaubt es dem Dienstanbieter, die Chipkarte, d.h. den Nutzer, eindeutig zuzuordnen, auch wenn keine oder nur wenige personenbezogene Daten aus der Chipkarte ausgelesen werden dürfen. Weiterhin kann der Dienstanbieter über dieses eindeutige Pseudonym prüfen, ob die Chipkarte als gesperrt gemeldet worden ist. Das Verfahren stellt weiterhin sicher, dass die Dienstanbieter untereinander die Pseudonyme nicht miteinander verknüpfen können. Zwei oder mehr Dienstanbieter können anhand des Pseudonyms nicht feststellen, ob sie mit der gleichen Chipkarte kommuniziert haben. Das ist eines der Wesensmerkmale der Verwendung von Pseudonymen.
- Der Nutzer besitzt beispielsweise als Chipkarte einen Personalausweis, auf dem seine personenbezogenen Daten und eine geheime, kartenspezifische Kennung gespeichert sind. Weiterhin verfügt die Chipkarte über ein Schlüsselpaar zur Authentisierung sowie ein zugehöriges Echtheitszertifikat, das vom Herausgeber der Chipkarte ausgestellt wurde. Über dieses Zertifikat und den zugehörigen privaten Authentisierungsschlüssel kann sich die Chipkarte gegenüber den Dienstanbietern als echte Chipkarte ausweisen und einen sicheren Kanal zum Dienstanbieter aufbauen, so dass die personenbezogenen Daten vertraulich und authentisch übertragen werden können.
- Der Dienstanbieter erhält ebenfalls ein Schlüsselpaar und ein zugehöriges Berechtigungszertifikat. Das Berechtigungszertifikat gibt an, welche personenbezogenen Daten ein Dienstanbieter von den Chipkarten abfragen darf. Weiterhin enthält das Berechtigungszertifikat eine eindeutige Kennung, die von der Zertifizierungsstelle vergeben wird.

Die detaillierten Schritte des Verfahrens sind:

- Der Dienstanbieter authentisiert sich gegenüber der Chipkarte des Nutzers mit seinem Berechtigungszertifikat und dem zugehörigen privaten Schlüssel. Die Chipkarte überprüft die Authentisierung und validiert das Berechtigungszertifikat des Dienstanbieters.
- Die Chipkarte authentisiert sich gegenüber dem Dienstanbieter als echte Chipkarte und etabliert dabei eine sichere, d.h. verschlüsselte und integritätsgesicherte Kommunikation. Der Dienstanbieter überprüft die Authentisierung und validiert das Echtheitszertifikat der Chipkarte.
- Die Chipkarte extrahiert die Identität des Dienstanbieters aus dem Berechtigungszertifikat und berechnet zusammen mit der geheimen Chipkartenidentität das Pseudonym und sendet dieses über den sicheren Kanal an den Dienstanbieter.
- Der Dienstanbieter kann anhand des Pseudonyms prüfen, ob die Chipkarte bei dem Dienstanbieter registriert und ob die Chipkarte gesperrt ist. Ist die Chipkarte noch nicht registriert, kann der Dienstanbieter weitere personenbezogene Daten entsprechend der Erlaubnis im Berechtigungszertifikat auslesen und somit die Chipkarte unter dem Pseudonym registrieren.

Da die Technische Richtlinie BSI TR-03110 kein Signaturverfahren betrifft, gilt Folgendes:

- Die Chipkarte erzeugt das Pseudonym, ohne nachzuweisen, dass die Erzeugung korrekt ist. Die korrekte Berechnung des Pseudonyms wird angenommen, da sich die Chipkarte vorab als echte Chipkarte gegenüber dem Dienstanbieter authentisiert hat. Die Chipkarte muss sich vor der Abfrage des Pseudonyms gegenüber dem Dienstanbieter als echte Chipkarte authentisieren und einen sicheren Kanal aufbauen. Ohne diesen zusätzlichen Schritt ist nicht sichergestellt, dass das Pseudonym tatsächlich von der Chipkarte erzeugt wurde. Eine manipulierte Chipkarte könnte sich leicht für eine andere Chipkarte ausgeben und die Sicherheit des Systems ist kompromittiert. Diese zusätzliche Authentisierung identifiziert die Chipkarte entweder eindeutig bei Verwendung eines individuellen Chipkartenschlüssels. Oder, wenn eine Vielzahl von Chipkarten den gleichen Authentisierungsschlüssel verwenden, ergibt sich das Problem der Revokation einzelner Chipkarten bei Kompromittierung des gemeinsamen Schlüssels.
- Das Pseudonym ist lediglich eine bereichspezifische Kennung der Chipkarte. Es fehlt die Möglichkeit, Transaktionen durch die Chipkarte zu authentisieren. Das Pseudonym ermöglicht es dem Dienstanbieter, die Chipkarte wiederzuerkennen, es erlaubt jedoch nicht, Willenserklärungen des Nutzers durch die Chipkarte unter dem Pseudonym nachweisbar zu dokumentieren, beispielsweise die Annahme der AGBs des Dienstanbieters, oder die nachprüfbare Stimmabgabe unter dem Pseudonym in einem Wahlsystem.

Aus der Literatur bekannt sind verschiedene Verfahren zur Erstellung einer elektronischen Signatur. Geläufig sind digitale Signaturen, bei dem jedem Signaturersteller ein eigenes, individuelles Schlüsselpaar, bestehend aus einem privaten statischen Signaturschlüssel und einem öffentlichen statischen Signaturprüfschlüssel zugeordnet ist. Durch die eindeutige Zuordnung des öffentlichen statischen Signaturprüfschlüssels kann jeder Signaturempfänger prüfen, dass eine Signatur von einem bestimmten Ersteller erzeugt wurde. Ebenfalls bekannt aus der Literatur sind Gruppensignaturen, bei denen jeweils einer Gruppe von Signaturerstellern der gleiche öffentliche statische Signaturschlüssel, (Gruppenschlüssel genannt), zugeordnet ist, aber jeder Signierende einen eigenen privaten Signaturschlüssel besitzt. Bei einer Gruppensignatur ist die Signatur lediglich auf die Gruppe zurückzuführen, jedoch nicht auf ein bestimmtes Gruppenmitglied. Es besteht auch keine Möglichkeit festzustellen, ob zwei Signaturen von demselben Gruppenmitglied oder von unterschiedlichen Gruppenmitgliedern erzeugt wurde/wurden.

Aus der WO-A-2010/034 507 ist ein Verfahren zur elektronischen, pseudonymen Signatur zwischen einem Ersteller und einem Empfänger bekannt, derart, dass

- der Ersteller eine Chipkarte aufweist,
- der Ersteller ein Gruppenmitglied ist,
- jedem Gruppenmitglied ein gleicher, öffentlicher Gruppenschlüssel zugeordnet ist,
- jedem Gruppenmitglied ein eigener, privater Schlüssel zugeordnet ist,
- der Empfänger der Signatur eine Identität aufweist,
- das Verfahren folgende Schritte aufweist:

    a) der Ersteller empfängt die Identität vom Empfänger,
    b) der Ersteller berechnet ein Pseudonym aus seinem eigenen, privaten Schlüssel und der Identität des Empfängers,
    c) der Ersteller berechnet eine Signatur für das Pseudonym,
    d) der Ersteller übermittelt die Signatur an den Empfänger,
    e) der Empfänger prüft das Pseudonym mit der Signatur und dem öffentlichen Gruppenschlüssel (und nicht die Signatur mit dem öffentlichen Gruppenschlüssel und dem Pseudonym).

Dadurch, dass die Prüfung des Pseudonyms lediglich über die Korrektheit der Signatur verifiziert wird, ergibt sich bei dem bekannten Verfahren der Nachteil, dass eine manipulierte Chipkarte ein falsches Pseudonym berechnen kann. Der Erfindung liegt die Aufgabe zugrunde, ein Verfahren zur Erstellung und Überprüfung einer elektronischen pseudonymen Signatur für den (insbesondere anonymen) Datenaustausch zwischen einem Ersteller (z.B. einem Nutzer einer Chipkarte) und einem Empfänger (z.B. Dienstanbieter) zu schaffen, das einfach und sicher ist und sich vielfältig einsetzen lässt.

Die Lösung dieser Aufgabe ergibt sich durch die Merkmale der angehängten Patentansprüche 1 bis 11. Zur Lösung dieser Aufgabe wird mit der Erfindung ein Verfahren zur Erstellung und Überprüfung einer elektronischen, pseudonymen Signatur zur Verwendung bei der Kommunikation zwischen einem Ersteller und einem Empfänger vorgeschlagen, wobei der Ersteller Mitglied einer Gruppe von Erstellern ist, von denen jedem ein gleicher öffentlicher statischer Gruppenschlüssel (y) und ein eigener privater statischer Schlüssel ($x_1,x_2$) zugeordnet ist und wobei der Empfänger eine Identität (R) aufweist und wobei bei dem Verfahren

- der Ersteller vom Empfänger dessen Identität (R) empfängt,

- der Ersteller aus sowohl seinem eigenen privaten Schlüssel ($x_1,x_2$) oder einen Teil davon als auch der Identität (R) des Empfängers mindestens ein Pseudonym ($I_R$) berechnet,
- der Ersteller unter Verwendung des Pseudonyms ($I_R$) eine elektronische pseudonyme Signatur ($I_R,c,s_1,s_2$) berechnet,
- der Ersteller die elektronische pseudonyme Signatur ($IR,c,s_1,s_2$) an den Empfänger übermittelt und
- der Empfänger die elektronische pseudonyme Signatur ($I_R,c,c_1,s_2$) des Erstellers anhand von dessen öffentlichen Gruppenschlüssel (y) sowie seiner eigenen Identität (R) überprüft (was bedeutet, dass die Signaturprüfung fehlschlägt, wenn das Pseudonym falsch ist).

Wesentlicher Aspekt der Erfindung ist es, dass das Pseudonym überprüfbar aus dem gleichen privaten Schlüssel erstellt wird, wie die Signatur und somit Pseudonym und Signatur untrennbar miteinander verbunden sind. Daraus ergibt sich der Vorteil, dass die Signaturprüfung nur dann erfolgreich ist, wenn das Pseudonym korrekt erzeugt wurde.

Die Vorteile der Erfindung basieren darauf, dass anstelle der alleinigen Berechnung eines Pseudonyms ein neuartiges Signaturverfahren vorliegt.

- Bei diesem Signaturverfahren ist jedem Gruppenmitglied ein gleicher, öffentlicher Gruppenschlüssel zugeordnet. Ferner ist jedem Gruppenmitglied ein eigener, privater Schlüssel zugeordnet ist. Weiterhin sind die von den Gruppenmitgliedern erstellten Signaturen gegenüber dem festgelegten (Signatur-)Empfänger pseudonym. Dies bedeutet, dass jeder (Signatur-)Empfänger prüfen kann, ob eine Signatur von dem gleichen Gruppenmitglied erstellt wurde. Eine Verkettung von Pseudonymen, die zwei verschiedenen (Signatur-)Empfängern gegeben wurden, ist jedoch ausgeschlossen.
- Aufgrund der zusätzlichen Signatur kann der Empfänger (z.B. Dienstanbieter) z.B. über ein Challenge-Response-Verfahren prüfen, dass das Pseudonym tatsächlich durch den Ersteller (z.B. die Chipkarte) unter Verwendung des zugehörigen, privaten Schlüssels erzeugt wurde. Eine vorausgehende Authentisierung des Erstellers (der Chipkarte) selbst kann somit entfallen. Da jeder Ersteller (jede Chipkarte) über seinen eigenen, privaten Schlüssel verfügt, hat eine Kompromittierung dieses einen Schlüssels geringere Auswirkungen.
- Ferner kann der Ersteller (z.B. Nutzer der Chipkarte) über die Signatur eine Willenserklärung unter dem Pseudonym abgeben und somit eine Transaktion gegenüber dem Dienstanbieter authentisieren.

Bisher unbekannt ist eine pseudonyme Signatur, wie sie nach der Erfindung vorgeschlagen wird, also ein Signaturverfahren, das zwischen einer individuellen digitalen Signatur und einer Gruppensignatur anzusiedeln ist. Analog zur Gruppensignatur wird bei der erfindungsgemäßen pseudonymen Signatur die Gruppe der Signierenden (d.h. der Ersteller) durch einen gemeinsamen statischen Gruppenschlüssel repräsentiert. Außerdem besitzt jedes Gruppenmitglied einen Individuellen privaten statischen Schlüssel. Zusätzlich wird jedem Empfänger eine eindeutige Identität zugewiesen. Bei der Signaturerstellung wird aus dem privaten individuellen Schlüssel des Signierenden und der Identität des Signaturempfängers ein eindeutiges Pseudonym als Bestandteil der Signatur berechnet, so dass bei der Signaturprüfung durch den berechtigten Signaturempfänger die Korrektheit der Signatur einschließlich des Pseudonyms mithilfe des Gruppenschlüssels geprüft werden kann. Dadurch ergibt sich der Vorteil, dass der Signierende eindeutig über das Pseudonym wiedererkannt werden kann. Folglich kann der Signaturempfänger prüfen, ob zwei Signaturen von demselben Ersteller oder von unterschiedlichen Erstellern erzeugt wurden. Zwei unterschiedliche Signaturempfänger können jedoch nicht feststellen, ob zwei Signaturen von demselben Ersteller erzeugt wurden, da die Pseudonymbildung abhängig ist von der Empfängeridentität. Ein besonderer Vorteil ergibt sich durch die erfindungsgemäße Signaturerstellung mit dem Pseudonym, indem durch das Signaturverfahren sichergestellt ist, dass sowohl Pseudonym als auch Signatur mit dem gleichen privaten Signaturschlüssel erstellt wurden. Dadurch kann der Signaturempfänger nach Prüfung der Signatur mit dem Gruppenschlüssel und dem Pseudonym sicherstellen, dass das Pseudonym korrekt erzeugt wurde. Andernfalls wäre die Signatur nicht verifizierbar.

Die Erfindung weist den großen Vorteil auf, dass die Berechnungsaufwände für die Erstellung und Verifikation einer pseudonymen Signatur wesentlich geringer sind als bei einer Gruppensignatur, da der Schritt, bei dem der Ersteller eine Signatur mit dem Pseudonym berechnet, als simultaner Beweis der Kenntnis des eigenen, privaten Schlüssels erfolgt.

Die Unterschiede der Erfindung gegenüber dem bekannten Verfahren nach WO-A-2010/034 507 sind wie folgt:

- Der Ersteller berechnet eine Signatur mit dem Pseudonym und nicht, wie bei dem bekannten Verfahren, eine Signatur für das Pseudonym. Durch die erfindungsgemäße Signaturerstellung mit Pseudonym ergibt sich ein besonderer Vorteil dadurch, dass durch das Signaturverfahren sichergestellt ist, dass sowohl Pseudonym als auch Signatur mit dem gleichen privaten Signaturschlüssel erstellt wurden. Im Gegensatz dazu wird bei dem bekannten Verfahren ein Pseudonym durch den Signierenden erstellt und durch eine (Gruppen-)Signatur authentisiert. Durch die Trennung von Pseudonymbildung und Signatur, wie es bei dem bekannten Verfahren der Fall ist, können Manipulationen durch den Signierenden weder ausgeschlossen noch erkannt werden.

- Bei der Erfindung prüft der Empfänger die Signatur mit dem öffentlichen Gruppenschlüssel und dem Pseudonym und nicht, wie bei dem bekannten Verfahren, das Pseudonym mit der Signatur und dem öffentlichen Gruppenschlüssel. Dadurch ergibt sich der besondere Vorteil, dass der Signaturempfänger nach Prüfung der Signatur mit dem Gruppenschlüssel sicherstellen kann, dass das Pseudonym korrekt erzeugt wurde bzw. anders ausgedrückt: die Prüfung der Signatur schlägt fehl, wenn das Pseudonym nicht korrekt erzeugt wurde. Andernfalls wäre die Signatur nicht verifizierbar. Im Gegensatz dazu wird bei dem bekannten Verfahren ein Pseudonym allein durch den Signierenden bestimmt und durch eine (Gruppen-)Signatur authentisiert.

- Der Schritt, bei dem der Ersteller eine Signatur mit dem Pseudonym berechnet, erfolgt als simultaner Beweis der Kenntnis des eigenen, privaten Schlüssels. Dieses Merkmal ist ohne Vorbild beim bekannten Verfahren. Mit dem erfindungsgemäßen Verfahren wird eine effiziente Implementierung bewirkt. Die Berechnung einer pseudonymen Signatur kann besonders effizient erfolgen, wenn die Signaturerstellung nicht nur die Erzeugung des Pseudonyms beinhaltet, sondern (simultan) auch den Nachweis der Korrektheit des Pseudonyms erbringt. Im Vergleich zum bekannten Verfahren ist damit eine deutliche Effizienzsteigerung möglich. Bei dem bekannten Verfahren ist eine Gruppensignatur zur Anonymisierung des Signierenden erforderlich, welche mit erheblichen Berechnungsaufwänden verbunden ist.

Zweckmäßigerweise wird die elektronische pseudonyme Signatur ($I_R$,c,$s_1$,$s_2$) auf Basis der Berechnung einer Schnorr-Signatur erstellt.

Ferner kann zusätzlich vorgesehen sein, dass sich der Empfänger gegenüber dem Ersteller mittels eines von einer dritten Stelle bescheinigten Berechtigungszertifikats, das die Identität (R) des Empfängers enthält, authentisiert und dass der Ersteller die Authentisierung sowie das Berechtigungszertifikat überprüft und aus dem Berechtigungszertifikat die Identität (R) des Empfängers extrahiert.

Es sei darauf hingewiesen, dass der Ersteller z.B. eine Chipkarte oder einen Server aufweist und/oder dass der Empfänger z.B. ein Dienstanbieter ist.

In weiterer vorteilhafter Ausgestaltung der Erfindung wird für die Erstellung der elektronischen pseudonymen Signatur eine kryptographisch sicherere, beispielsweise multiplikativ oder additiv geschriebene, mathematische Gruppe mit unter anderem einem kryptographischen Generator ($g_1$) und eine Hash-Funktion verwendet.

Ein anderer Aspekt der Erfindung betrifft den Fall, dass jeder Empfänger einer elektronischen pseudonymen Signatur die von einem Ersteller einer Gruppe erzeugten Pseudonyme mit Pseudonym-Einträgen einer Blacklist oder Whitelist vergleicht, um zu überprüfen, ob der Ersteller berechtigt ist, eine elektronische pseudonyme Signatur unter Verwendung seines privaten statischen Schlüssels und des öffentlichen statischen Gruppenschlüssels zu erstellen. Diesem Aspekt der Erfindung kommt selbstständige Bedeutung zu. D.h., dass diese Verfahrensschritte unabhängig von den anderen hier und im Folgen beschriebenen Verfahrensschritten einen eigenständigen erfinderischen Aspekt bilden.

Bei dem zuvor beschriebenen Aspekt kann insbesondere vorgesehen sein, dass für jeden möglichen Empfänger sämtliche gültigen Pseudonyme in einer Whitelist aufgelistet werden und dass ein solcher Empfänger vor Verifikation der elektronischen pseudonymen Signatur prüft, dass das Pseudonym in der Whitelist enthalten ist.

Ferner ist es denkbar, dass für jeden möglichen Empfänger sämtliche gesperrten Pseudonyme in einer Blacklist aufgelistet werden und dass ein solcher Empfänger vor Verifikation der pseudonymen Signatur prüft, dass das Pseudonym in der Blacklist nicht enthalten ist.

Gemäß einer Ausgestaltung der Erfindung erfolgt der Schritt, bei dem der Ersteller eine Signatur mit dem Pseudonym berechnet, als simultaner Beweis der Kenntnis des eigenen, privaten Schlüssels. Durch diesen Beweis wird gleichzeitig nachgewiesen, dass der eigene, private Schlüssel sowohl zur Erzeugung des Pseudonyms als auch zur Erstellung der pseudonymen Signatur verwendet wurde. Dadurch sind die beiden Vorgänge untrennbar miteinander verbunden und die Signatur ist an das Pseudonym gebunden, so dass diese nicht voneinander getrennt werden können. Ferner ergibt sich durch den gleichzeitigen Beweis auch eine effiziente Implementierung, da die korrekte Erzeugung des Pseudonyms nicht separat bewiesen werden muss.

Gemäß einer weiteren Ausgestaltung der Erfindung prüft der Empfänger mit Hilfe des Pseudonyms an Hand einer Blacklist oder Whitelist, ob die Chipkarte gültig ist. Eine Blacklist enthält gesperrte Pseudonyme, wobei alle anderen Pseudonyme gültig sind. Eine Whitelist enthält die gültigen Pseudonyme, alle anderen Pseudonyme sind gesperrt. Welche der beiden Listentypen verwendet wird, kann davon abhängen, wie viele Pseudonyme gesperrt sind. Über ein Whitelisting kann selbst bei Kompromittierung des für alle Gruppenmitglieder gleichen, öffentlichen Gruppenschlüssels die Sicherheit des Verfahrens aufrecht erhalten werden.

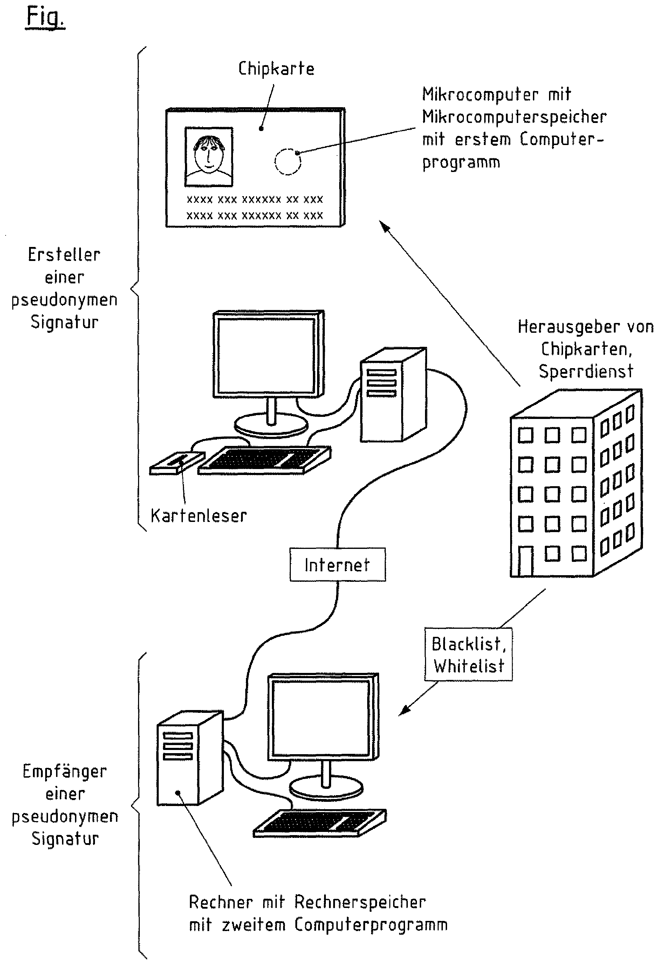

Ein Ausführungsbeispiel der Erfindung wird nachfolgend anhand der Zeichnung näher erläutert. Die Zeichnung illustriert ein Verfahren zur Erzeugung und Überprüfung einer elektronischen pseudonymen Signatur für die insbesondere anonyme Kommunikation zwischen einem Ersteller und einem Empfänger.

In der Zeichnung ist zunächst eine Chipkarte dargestellt. Diese Chipkarte ist einem Ersteller einer Signatur zugeordnet. Der Ersteller der Signatur ist eine Person und die Chipkarte ist ein Personalausweis. Auf dieser Chipkarte ist ein eigener, privater Schlüssel ($x_1$,$x_2$)

zur Erzeugung von Signaturen und Pseudonymen gespeichert. Der eigene, private Schlüssel ($x_1,x_2$) ist ein Tupel. Die Chipkarte gehört zu einer Generation von Chipkarten, die alle einen gemeinsamen öffentlichen Gruppenschlüssel $y$ ausweisen. Der öffentliche Gruppenschlüssel $y$ wird zum Verifizieren von Signaturen und Pseudonymen verwendet. Eine Generation von Chipkarten können diejenigen Chipkarten sein, die in einem Zeitraum von drei Monaten produziert werden. In diesem Fall sind die Chipkarten einer Generation die Gruppenmitglieder.

Der Empfänger einer Signatur ist ein Dienstanbieter. Der Dienstanbieter ist im Ausführungsbeispiel eine Wahlzentrale. Der Empfänger hat eine Identität, die in einem Berechtigungszertifikat enthalten ist. Eine zu signierende Nachricht kann beispielsweise ein elektronischer Wahlzettel sein.

Die Chipkarte umfasst einen Mikrocomputer mit einem Mikrocomputerspeicher. Im Mikrocomputerspeicher ist ein erstes Computerprogramm abgespeichert, das so ausgebildet ist, dass ein Verfahren zur pseudonymen Signatur bezüglich des Erstellers ausführbar ist. Die Implementierung des ersten Computerprogramms in den Mikrocomputerspeicher erfolgte unter Verwendung eines ersten Computerprogrammproduktes.

Dem Empfänger ist ein Rechner mit einem Rechnerspeicher zugeordnet. Im Rechnerspeicher ist ein zweites Computerprogramm abgespeichert, das so ausgebildet ist, dass das Verfahren bezüglich des Empfängers ausführbar ist. Die Implementierung des zweiten Computerprogramms in den Rechnerspeicher erfolgte unter Verwendung eines zweiten Computerprogrammproduktes.

Die Chipkarte des Erstellers wird in einem Kartenleser gelesen und steht über das Internet mit dem Rechner des Empfängers In Verbindung.

### Setup

In der Zeichnung ist ein Herausgeber der Chipkarte eingezeichnet. Der Herausgeber der Chipkarte wählt geeignete Parameter für das zugrundeliegende mathematische Verfahren, nach dem die elektronische Signatur erstellt wird, also z.B. eine elliptische Kurve oder einen Primkörper. Die Parameter bestehen mindestens aus dem Erzeuger (kryptographischer Generator) $g_1$, der Größe q (auch Ordnung genannt) der dadurch erzeugten mathematischen Gruppe (nachfolgend auch Struktur genannt) sowie einer Beschreibung der darauf ausführbaren Operation (Multiplikation oder Addition, im Ausführungsbeispiel wird die Multiplikation verwendet). Der Herausgeber wählt eine geheime Zufallszahl $z \in_R Z_q$ und bestimmt einen zusätzlichen Erzeuger (kryptographischer Generator) $g_2 = g_1^z$ Die Parameter der kryptographischen Gruppe und der zusätzliche Erzeuger $g_2$ werden veröffentlicht, der Wert $z$ wird vom Herausgeber der Chipkarte geheim gehalten.

### Schlüsselerzeugung für Gruppenmitglieder

Jedem Gruppenmitglied ist ein Schlüsselpaar zugeordnet, bestehend aus einem gleichen, öffentlicher Gruppenschlüssel $y = g_1^{x_1} \cdot g_2^{x_2}$ und einem eigenen, privaten Schlüssel ($x_1,x_2$). Die Anzahl der möglichen privaten Schlüssel bestimmt sich aus der Größe der gewählten mathematischen Struktur. Daher gibt es bei einer Struktur mit einer Ordnung $q$ auch $q$ unterschiedliche Schlüssel. In der Regel ist $q$ eine Primzahl mit mindestens einer Länge von 200 Bit. Zur Erzeugung von mehreren, privaten Schlüsseln wird vom Herausgeber der Chipkarte zunächst ein festes Schlüsselpaar $\left(x, y = g_1^z\right)$ gewählt. Anschließend wird für jedes Gruppenmitglied ein eigener, privater Schlüssel wie folgt erzeugt: Der Wert $x_2 \in_R Z_q$ wird vom Herausgeber der Chipkarte für jede Chipkarte zufällig gewählt und anschließend wird der Wert $x_1 = x - z \cdot x_2$ berechnet. Da $x = x_1 + z \cdot x_2$, kann aus je zwei unterschiedlichen privaten Schlüsseln ($x_1,x_2$) und $\left(x_1', x_2'\right)$ die geheime Zufallszahl

$$z = \frac{x_1 - x_1'}{x_2 - x_2'}$$

berechnet werden. Daher müssen die privaten Schlüssel sicher auf der Chipkarte gespeichert werden. Weiterhin berechnet der Herausgeber der Chipkarte die Sperridentität $S = g_1^{x_1}$ des Gruppenmitglieds und leitet diesen an den Sperrdienst weiter. Der Sperrdienst ist im Ausführungsbeispiel auch der Herausgeber der Chipkarte.

### Registrierung von Empfängern

Jeder registrierte Dienstanbieter wird durch eine eindeutige Identität $R = g_1^{x_R}$ gekennzeichnet. Die Empfängeridentitäten werden durch den Herausgeber der Chipkarte berechnet. Die Empfängeridentitäten $R$ werden veröffentlicht. Die zugehörigen Werte $x_R$ müssen den Empfängern weiterhin unbekannt bleiben und werden an den Sperrdienst übermittelt.

### Verfahren zur elektronischen pseudonymen Signatur

Folgende Variablen werden für die Signatur und Pseudonymerstellung verwendet:

- der öffentliche Gruppenschlüssel $y$ des Erstellers,
- der zugehörige eigene, private Schlüssel ($x_1,x_2$) des Erstellers,
- die zu signierende Nachricht $m$,
- die Identität $R$ des Empfängers.

Die Signatur und Pseudonymerstellung erfolgt in folgenden Schritten a) bis e):

a) Der Ersteller empfängt die Identität und optional die zu signierende Nachricht vom Empfänger.
Der Empfänger authentisiert sich gegenüber dem Ersteller mit einem Berechtigungszertifikat, das seine Identität $R$ enthält. Der Ersteller überprüft die Authentisierung und das Berechtigungszertifikat und extrahiert dann die Identität $R$ aus dem Zertifikat.
b) Der Ersteller berechnet ein Pseudonym aus seinem eigenen, privaten Schlüssel und der Identität des Empfängers.
Der Ersteller berechnet das Pseudonym als $I_R = R^{x_1}$.
c) Der Ersteller berechnet eine Signatur mit dem Pseudonym. Dieser Schritt erfolgt als simultaner Beweis der Kenntnis des eigenen, privaten Schlüssels $(x_1, x_2)$. Die Signaturerstellung erfolgt in den folgenden Schritten:

- Erstelle einen ephemeralen Schlüssel $(r_1, r_2)$ mit $r_1 \in_R Z_q$ und $r_2 \in_R Z_q$.
- Berechne daraus einen öffentlichen ephemeralen Schlüssel $a_1 = g_1^{r_1} \cdot g_2^{r_2}$ und $a_2 = R^{r_1}$
- Berechne den Hash $c = H([R, I_R,] a_1, a_2, m)$.

    - Sei $s_1 = r_1 - c \cdot x_1$ und $s_2 = r_2 - c \cdot x_2$.

d) Der Ersteller übermittelt das Pseudonym und die Signatur an den Empfänger.
Das Pseudonym $I_R$ und die Signatur $(c, s_1, s_2)$ werden an den Empfänger gesendet.
e) Der Empfänger prüft die Signatur mit dem öffentlichen Gruppenschlüssel und dem Pseudonym.

Die Schritte sind:

- Berechne $a_1 = y^c \cdot g_1^{s_1} \cdot g_2^{s_2}$ und

$a_2 = I_R^c \cdot R^{s_1}$

- Die Signatur ist genau dann gültig, wenn $H([R, I_R,] a_1, a_2, m)$ ist.

**Optionen**

Die Werte $R$ und $I_R$ können bei der Signaturerstellung optional mit in die Signatur aufgenommen werden, um die Signatur zusätzlich explizit an Pseudonym und Empfängeridentität zu binden.
Die Signatur kann optional auf zwei Pseudonyme $I_{R_1} = R^{x_1}$ und $I_{R_2} = R^{x_2}$ erweitert werden.

**Prüfung der Gültigkeit der Chipkarte mit einer Blacklist oder Whitelist**

Zusätzlich prüft der Empfänger, ob die Chipkarte gültig ist. Hierzu vergleicht der Empfänger das Pseudonym mit dem Pseudonym einer Blacklist. Die Blacklist wird von einem Sperrdienst geführt, der im vorliegenden Beispiel auch der Herausgeber der Chipkarte ist. Blacklisting wird verwendet, um einen eigenen, privaten Schlüssel eines Gruppenmitgliedes zurückzuziehen, wenn beispielsweise das Gruppenmitglied die Gruppe verlässt. Für jeden registrierten Empfänger muss eine eigene Blacklist erzeugt werden, auf der die gesperrten Pseudonyme aufgeführt werden.
Im Rahmen der Schlüsselerzeugung für ein Gruppenmitglied hat der Sperrdienst die Sperridentität $S = g_I^{x_I}$ des Gruppenmitglieds erhalten und dann abgespeichert. Um ein Gruppenmitglied mit einem eigenen, privaten Schlüssel $(x_1, x_2)$ zu sperren, muss für jeden registrierten Empfänger $R$ das jeweilige Pseudonym $I_R = R^{x_1}$ berechnet und auf der Blacklist des Empfängers gespeichert werden. Dazu berechnet der Sperrdienst jeweils aus der privaten Kennung $x_R$ des Empfängers $R$ und der Sperridentität $S = g_I^{x_I}$ des Gruppenmitglieds das Pseudonym $I_R = S^{x_R} = g_1^{x_1 \cdot x_R} = R^{x_1}$.
Die berechneten Pseudonyme werden auf einer empfängerspezifischen Blacklist eingestellt.
Der Empfänger kann auch mit Hilfe des Pseudonyms an Hand einer Whitelist eines Sperrdienstes prüfen, ob die Chipkarte gültig ist. Wenn der Gruppenschlüssel $y$ kompromittiert ist, muss dieser zurückgezogen werden. In diesem Fall können über ein Whitelisting alle weiterhin gültigen Pseudonyme berechnet werden. Die Berechnung der Pseudonyme erfolgt analog zum Blacklisting.
Um ein Gruppenmitglied mit einem eigenen, privaten Schlüssel $(x_1, x_2)$ als weiterhin gültig zu erklären, muss für jeden registrierten Empfänger $R$ das jeweilige Pseudonym $I_R = R^{x_1}$ berechnet und auf der Whitelist des Empfängers gespeichert werden. Dazu berechnet der Sperrdienst jeweils aus der privaten Kennung $x_R$ des Empfängers $R$ und der Sperridentität $S = g_I^{x_I}$ des Gruppenmitglieds das Pseudonym $I_R = S^{x_R} = g_1^{x_1 \cdot x_R} = R^{x_1}$. Die berechneten Pseudonyme werden auf einer empfängerspezifischen Whitelist eingestellt. Unter der Annahme, dass es wesentlich weniger Gruppenmitglieder als $q$ gibt, wird ein Angreifer durch zufälliges Wählen oder Berechnen eines privaten Schlüssels mit hoher Wahrscheinlichkeit einen Schlüssel produzieren, für den die zugehörige Sperridentität nicht auf der Whitelist enthalten ist.

**Patentansprüche**

1. Verfahren zur Erstellung und Überprüfung einer elektronischen, pseudonymen Signatur zur Verwendung bei der Kommunikation zwischen einem Ersteller und einem Empfänger, wobei der Ersteller Mitglied einer Gruppe von Erstellern ist, von denen jedem ein gleicher öffentlicher statischer Gruppenschlüssel (y) und ein eigener privater statischer Schlüssel ($x_1$, $x_2$) zugeordnet ist und wobei der Empfänger eine Identität (R) aufweist, wobei bei dem Verfahren

- der Ersteller vom Empfänger dessen Identität (R) empfängt,
- der Ersteller aus sowohl seinem eigenen privaten Schlüssel ($x_1$, $x_2$) oder einem Teil davon als auch der Identität (R) des Empfängers mindestens ein Pseudonym ($I_R$) berechnet,
- der Ersteller unter Verwendung des Pseudonyms ($I_R$) und seines eigenen privaten Schlüssels ($x_1$, $x_2$) eine elektronische pseudonyme Signatur ($I_R$, c, $s_1$, $s_2$) berechnet,
- der Ersteller die elektronische pseudonyme Signatur ($I_R$, c, $s_1$, $s_2$) an den Empfänger übermittelt und
- der Empfänger anhand seiner eigenen Identität (R) und des öffentlichen Gruppenschlüssels (y) die elektronische pseudonyme Signatur ($I_R$, c, $s_1$, $s_2$) einschließlich der korrekten Erzeugung des erhaltenen Pseudonyms ($I_R$) des Erstellers verifiziert.

2. Verfahren nach Anspruch 1, **dadurch gekennzeichnet, dass** die elektronische pseudonyme Signatur ($I_R$, c, $s_1$, $s_2$) auf Basis der Berechnung einer Okamoto-Schnorr-Signatur erstellt wird.

3. Verfahren nach einem der Ansprüche 1 oder 2, **dadurch gekennzeichnet, dass** sich der Empfänger gegenüber dem Ersteller mittels eines von einer dritten Stelle bescheinigten Berechtigungszertifikats, das die Identität (R) des Empfängers enthält, authentisiert und dass der Ersteller die Authentisierung sowie das Berechtigungszertifikat überprüft und aus dem Berechtigungszertifikat die Identität (R) des Empfängers extrahiert.

4. Verfahren nach Anspruch 1 bis 3, **dadurch gekennzeichnet, dass** der Ersteller eine Chipkarte oder einen Server aufweist und/oder dass der Empfänger ein Dienstanbieter ist.

5. Verfahren nach Anspruch 1 bis 4, **dadurch gekennzeichnet, dass** für die Erstellung der elektronischen pseudonymen Signatur eine kryptographisch sicherere, beispielsweise multiplikativ oder additiv geschriebene, mathematische Gruppe mit unter anderem einem kryptographischen Generator ($g_1$) und eine Hash-Funktion verwendet werden.

6. Verfahren nach einem der Ansprüche 1 bis 5, **dadurch gekennzeichnet, dass** für jeden möglichen Empfänger sämtliche gültigen Pseudonyme ($I_R$) in einer Whitelist aufgelistet werden und dass ein solcher Empfänger vor Verifikation der elektronischen pseudonymen Signatur ($I_R$, c, $s_1$, $s_2$) prüft, dass das Pseudonym ($I_R$) in der Whitelist enthalten ist.

7. Verfahren nach einem der Ansprüche 1 bis 6, **dadurch gekennzeichnet, dass** für jeden möglichen Empfänger sämtliche gesperrten Pseudonyme ($I_R$) in einer Blacklist aufgelistet werden und dass ein solcher Empfänger vor Verifikation der pseudonymen Signatur ($I_R$, c, $s_1$, $s_2$) prüft, dass das Pseudonym ($I_R$) in der Blacklist nicht enthalten ist.

8. Verwendung des Verfahrens nach einem der vorhergehenden Ansprüche für den anonymen Datenaustausch zwischen zwei Kommunikationspartnern.

9. Verfahren zur authentisierten Kommunikation zwischen zwei Kommunikationspartnern unter Verwendung des Verfahrens nach einem der Ansprüche 1 bis 7.

10. Chipkarte, die eingerichtet ist, das Verfahren nach einem der Ansprüche 1 bis 7 bezüglich des Erstellers durchzuführen.

11. Rechner, der eingerichtet ist, das Verfahren nach einem der Ansprüche 1 bis 7 bezüglich des Empfängers durchzuführen.

## Claims

1. Method for generating and verifying an electronic pseudonymous signature to be used in communication between a generator and a recipient, wherein the generator is a member of a group of generators, each of which is assigned an identical public static group key (y) and an own private static key ($x_1$, $x_2$), and wherein the recipient has an identity (R), wherein, with the method:

- the generator receives the identity (R) of the recipient,
- the generator calculates at least one pseudonym ($I_R$) both from his own private key ($x_1$, $x_2$) or from a part thereof, as well as from the recipient's identity (R),
- the generator calculates an electronic pseudonymous signature ($I_R$, c, $s_1$, $s_2$) using the pseudonym ($I_R$) and his own private key ($x_1$, $x_2$),
- the generator transmits the electronic pseudonymous signature ($I_R$, c, $s_1$, $s_2$) to the recipient, and
- the recipient verifies the generator's electronic pseudonymous signature ($I_R$, c, $s_1$, $s_2$) on the

basis of the recipient's own public group key (y) and his own identity (R), including the correct generation of the pseudonym ($I_R$) of the generator which has been received.

2. Method according to claim 1, **characterized in that** the electronic pseudonymous signature ($I_R$, c, $s_1$, $s_2$) is generated on the basis of the calculation of an Okamoto-Schnorr signature.

3. Method according to any one of claims 1 or 2, **characterized in that** the recipient establishes authentication in relation to the generator by means of an entitlement certificate, certified by a third party, which contains the identity (R) of the recipient, and that the generator verifies the authentication as well as the entitlement certificate, and extracts from the entitlement certificate the identity (R) of the recipient.

4. Method according to claims 1 to 3, **characterized in that** the generator comprises a chip card or a server, and/or that the recipient is a service provider.

5. Method according to claims 1 to 4, **characterized in that**, for the generation of the electronic pseudonymous signature, use is made of a cryptographically secure written mathematical group, for example multiplicative or additive, with, among other elements, a cryptographic generator ($g_1$) and a has function.

6. Method according to any one of claims 1 to 5, **characterized in that**, for each possible recipient, all the valid pseudonyms ($I_R$) are listed in a white list, and that such a recipient verifies, before the verification of the electronic pseudonymous signature ($I_R$, c, $s_1$, $s_2$), that the pseudonym ($I_R$) is included in the white list.

7. Method according to any one of claims 1 to 6, **characterized in that**, for each possible recipient, all the blocked pseudonyms ($I_R$) are listed in a black list, and that such a recipient, before the verification of the pseudonymous signature ($I_R$, c, $s_1$, $s_2$), verifies that the pseudonym ($I_R$) is not contained in the black list.

8. Use of the method according to any one of the preceding claims for the anonymous data exchange between two communication partners.

9. Method for the authenticated communication between two communication partners, making use of the method according to any one of claims 1 to 7.

10. Chip card which is configured such as to carry out the method according to any one of claims 1 to 7 with regard to the generator.

11. Computer which is configured such as to carry out the method according to any one of claims 1 to 7 with regard to the recipient.

**Revendications**

1. Procédé de création et de vérification d'une signature électronique par pseudonyme, destiné à être utilisé pour la communication entre un créateur et un destinataire, dans lequel le créateur est membre d'un groupe de créateurs dont chacun reçoit une même clé commune publique invariable (y) et une propre clé invariable privée ($x_1$,$x_2$), et dans lequel le destinataire possède une identité (R), dans lequel, dans le procédé,

- le créateur reçoit l'identité (R) du destinataire de la part de ce dernier,
- le créateur calcule au moins un pseudonyme ($I_R$) aussi bien à partir de sa propre clé privée ($x_1$,$X_2$) ou d'une partie de celle-ci qu'à partir de l'identité (R) du destinataire,
- le créateur calcule une signature électronique par pseudonyme ($I_R$,c,$s_1$,$s_2$) en utilisant le pseudonyme ($I_R$) et sa propre clé privée ($x_1$,$x_2$),
- le créateur transmet la signature électronique par pseudonyme ($I_R$,c,$s_1$,$s_2$) au destinataire et,
- à l'aide de sa propre identité (R) et de la clé commune publique (y), le destinataire contrôle la signature électronique par pseudonyme ($I_R$,c,$s_1$,$s_2$), y compris la production correcte du pseudonyme ($I_R$) du créateur qui a été reçu.

2. Procédé selon la revendication 1, **caractérisé en ce que** la signature électronique par pseudonyme ($I_R$,c,$s_1$,$s_2$) est créée sur la base du calcul d'une signature Okamoto-Schnorr.

3. Procédé selon l'une des revendications 1 ou 2, **caractérisé en ce que**, vis-à-vis du créateur, le destinataire s'authentifie au moyen d'un certificat de légitimation, attesté par un troisième organisme, qui contient l'identité (R) du destinataire, et **en ce que** le créateur vérifie l'authentification ainsi que le certificat de légitimation, et extrait l'identité (R) du destinataire à partir du certificat de légitimation.

4. Procédé selon les revendications 1 à 3, **caractérisé en ce que** le créateur comporte une carte à puce ou un serveur, et/ou **en ce que** le destinataire est un fournisseur de services.

5. Procédé selon les revendications 1 à 4, **caractérisé en ce que**, pour la création de la signature électronique par pseudonyme, il est utilisé un groupe mathématique sûr au plan cryptographique, par exemple écrit de façon multiplicative ou additive, avec entre autres un générateur cryptographique ($g_I$), et une fonction Hash.

6. Procédé selon l'une des revendications 1 à 5, **caractérisé en ce que**, pour chaque destinataire possible, tous les pseudonymes ($I_R$) valides sont listés dans une whitelist, et **en ce qu'**un tel destinataire examine, avant le contrôle de la signature électronique par pseudonyme ($I_R,c,s_1,s_2$), que le pseudonyme ($I_R$) figure dans la whitelist.

7. Procédé selon l'une des revendications 1 à 6, **caractérisé en ce que**, pour chaque destinataire possible, tous les pseudonymes ($I_R$) bloqués sont listés dans une blacklist, et **en ce qu'**un tel destinataire examine, avant le contrôle de la signature par pseudonyme ($I_R,c,s_1,s_2$), que le pseudonyme ($I_R$) ne figure pas dans la blacklist.

8. Utilisation du procédé selon l'une des revendications précédentes pour l'échange de données anonyme entre deux partenaires de communication.

9. Procédé destiné à la communication authentifiée entre deux partenaires de communication avec utilisation du procédé selon l'une des revendications 1 à 7.

10. Carte à puce qui est agencée pour réaliser le procédé selon l'une des revendications 1 à 7 en ce qui concerne le créateur.

11. Calculateur qui est agencé pour réaliser le procédé selon l'une des revendications 1 à 7 en ce qui concerne le destinataire.

## Fig.

Chipkarte

Mikrocomputer mit
Mikrocomputerspeicher
mit erstem Computerprogramm

xxxx xxx xxxxxx xx xxx
xxxx xxx xxxxxx xx xxx

Ersteller
einer
pseudonymen
Signatur

Herausgeber von
Chipkarten,
Sperrdienst

Kartenleser

Internet

Blacklist,
Whitelist

Empfänger
einer
pseudonymen
Signatur

Rechner mit Rechnerspeicher
mit zweitem Computerprogramm

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010034507 A